# EUROPÄISCHE PATENTSCHRIFT

(11) **EP 3 838 669 B1**
(45) Veröffentlichungstag und Bekanntmachung des Hinweises auf die Patenterteilung: **07.12.2022**
(21) Anmeldenummer: 19217134.6
(22) Anmeldetag: 17.12.2019
(51) Int. Cl.: B60P 7/15

(54) **SPERRBALKEN ZUR ANORDNUNG IN EINEM LADERAUM EINES FAHRZEUGS**
BLOCKING BAR FOR ASSEMBLY IN A CARGO AREA OF A VEHICLE
BARRE DE VERROUILLAGE À INSTALLER DANS UN ESPACE DE CHARGEMENT D'UN VÉHICULE

(43) Veröffentlichungstag der Anmeldung: 23.06.2021
(73) Patentinhaber: WISTRA GmbH Cargo Control, 23923 Selmsdorf (DE)
(72) Erfinder: BIRENHEIDE, Christian, 23919 Berkenthin (DE)
(74) Vertreter: Patentanwälte Vollmann Hemmer Lindfeld Partnerschaft mbB

(56) Entgegenhaltungen:
- EP-A1- 3 453 569
- DE-U1-202016 101 843
- DE-U1-202019 100 808
- US-A- 5 281 063
- US-A1- 2013 200 024

## Beschreibung

Die Erfindung betrifft einen Sperrbalken zur Anordnung in einem Laderaum eines Fahrzeuges, der zur formschlüssigen Eingliederung in zwei gegenüberliegend fahrzeugseitig angeordnete Halteelemente vorgesehen ist.

Der artige Sperrbalken zählen zum Stand der Technik und werden beispielsweise von der WISTRA GmbH Cargo Control in Selmsdorf unter der Produktbezeichnung WIS Sperrbalken 1811 angeboten. Sie weisen typischerweise zwei in Längsrichtung des Balkens teleskopierbar angeordnete Balkenteile auf, die an ihren freien Enden jeweils ein An-schlusselement aufweisen, welches zur Aufnahme in einem Halteelement ausgebildet ist. Zwischen den Balkenteilen ist ein Federelement angeordnet, welches sicherstellt, dass zwischen den Anschlusselementen und den Halteelementen eine in Richtung auf das Halteelement wirkende Kraft erzeugt wird, die den Sperrbalken spielfrei zwischen den Halteelementen anordnet. Die Halteelemente sind typischerweise in sogenannten Zurrschienen ausgebildet, welche die Anbringung der Sperrbalken an einer Vielzahl von Orten im Fahrzeug ermöglichen. DE 20 2019 100808 U1 offenbart den Oberbegriff von Anspruch 1.

Die Anordnung der Anschlusselemente in den Halteelementen ist so, dass in Belastungsrichtung, das heißt quer zum Sperrbalken, ein Formschluss zwischen Anschlusselement und Halteelement gebildet ist. Um zu verhindern, dass die Anschlusselemente aus den Halteelementen austreten, ist ein Kraftschluss zwischen diesen Bauteilen vorgesehen, welcher durch ein zwischen den Balkenteilen wirksames Federelement erzeugt wird.

Nachteilig dabei ist allerdings, dass diese für den sicheren Sitz der Anschlusselemente innerhalb der Halteelemente erforderliche Spannkraft überwunden werden muss, wenn der Sperrbalken eingesetzt, entfernt oder zwischen zwei Halteelementen im Laderaum versetzt werden soll. Beim Einsetzen muss der Bediener zunächst den Sperrbalken mit einem Anschlusselement in ein Halteelement einsetzen und dann den Balken unter Überwindung der Federkraft so weit zusammenschieben, dass das Anschlusselement an der anderen Seite vor dem Halteelement angeordnet werden kann, in welches es dann nach Loslassen des Sperrbalkens federkraftbedingt gelangt. Hierbei sind häufig nicht unerhebliche Kräfte zu überwinden, sodass beide Hände erforderlich sind, was schwierig sein kann, insbesondere wenn der Sperrbalken an schlecht zugänglichen, zum Bespiel hohen Positionen im Laderaum, eingesetzt werden soll.

Vor diesem Hintergrund liegt der Erfindung die Aufgabe zu Grunde, einen Sperrbalken dahingehend zu verbessern, dass er einfacher einzusetzen, zu lösen bzw. zu versetzen ist.

Diese Aufgabe wird gemäß der Erfindung durch einen Sperrbalken mit den in Anspruch 1 angegebenen Merkmalen gelöst. Vorteilhafte Ausgestaltungen der Erfindung sind in den Unteransprüchen, der nachfolgenden Beschreibung und den Zeichnungen angegeben.

Der Sperrbalken zur Anordnung in einem Laderaum eines Fahrzeugs, der zur formschlüssigen Eingliederung in zwei gegenüberliegend fahrzeugseitig angeordnete Halteelemente vorgesehen ist, weist mindestens zwei in Längsrichtung des Balkens teleskopierbar angeordnete Rohrabschnitte auf. An den Enden des Sperrbalkens sind Anschlusselemente angeordnet, welche jeweils zur Aufnahme in ein Halteelement ausgebildet sind. Weiterhin ist ein Federelement vorgesehen, welches nach dem Einsetzen in die Halteelemente des Laderaums dafür sorgt, dass sich die Anschlusselemente nicht von selbst aus den Halteelementen lösen können.

Gemäß der Erfindung sind zwei Balkenteile um ihre Längsachse über einen Winkel zueinander drehbar angeordnet, wobei das Federelement als Drehfederelement ausgebildet und angeordnet ist, sodass es eine zwischen den Balkenteilen wirkende Torsionskraft erzeugen kann.

Grundgedanke der Erfindung ist es somit, den Sperrbalken so auszubilden, dass dieser nicht durch eine in Längsrichtung des Balkens wirkende Federkraft, sondern durch eine zwischen Balkenteilen wirkende Torsionsfederkraft in den Halteelementen gegen unbeabsichtigtes Heraustreten gesichert wird. Der erfindungsgemäße Sperrbalken ist also teleskopierbar, jedoch in Teleskopierrichtung und Gegenrichtung frei bewegbar und nicht kraftbeaufschlagt. Stattdessen sind zwei Balkenteile, die sich in Längsrichtung des Balkens aneinander anschließen, um ihre Längsachse über einen Winkel zueinander drehbar angeordnet, wobei das Federelement so ausgebildet und angeordnet ist, dass es eine zwischen den Balkenteilen wirkende Torsionskraft erzeugt.

Eine solche Ausbildung hat den Vorteil, dass der Sperrbalken wesentlich besser zu montieren, zu demontieren und im Betrieb zu versetzen ist als dies bei Sperrbalken nach dem Stand der Technik möglich ist. Kraftschlüssig erfolgt die Eingliederung durch eine auf das Anschlusselement ausgeübte Torsionskraft, welche das Anschlusselement, wenn es im Halteelement eingegliedert ist, um einen gewissen Winkel um die Längsachse dreht, sodass es auch in Längsrichtung des Balkens formschlüssig gehalten ist. Der erforderliche Kraftschluss, der verhindert, dass sich das Anschlusselement gegenüber dem Halteelement dreht, wird durch eine Torsionskraft erzeugt, die durch ein entsprechend ausgebildetes und angeordnetes Federelement gebildet wird.

Der Bediener kann somit den Sperrbalken ohne besonderen Kraftaufwand zusammenschieben oder auseinanderziehen und so in der Länge anpassen. Zum Einsetzen eines Sperrbalkens wird zunächst ein Anschlusselement an einem Ende in ein gewünschtes Halteelement eingesetzt, wonach das andere Halteelement um einen gewissen Winkel, zum Beispiel 45 Grad entgegen der Kraft des Federelements um die Längsachse des Sperrbalkens gedreht und dann in das Halteelement geschoben wird, in dem der Sperrbalken in Richtung seiner Längsachse weiter teleskopiert wird. Wenn dann dieses federkraftbelastete Anschlusselement losgelassen wird, wird es durch die Kraft der Feder um einen gewissen Winkel, von beispielsweise 20 Grad gedreht, sodass es auch in Längsrichtung des Balkens formschlüssig gesichert ist. Weiterhin ist die Torsionskraft des Federelements wirksam, sodass sich das Anschlusselement nicht unbeabsichtigt vom Halteelement lösen kann.

Unter Halteelement im Sinne der vorliegenden Erfindung ist eine Aufnahme für ein Anschlusselement zu verstehen, welches dieses insbesondere in Querrichtung zum Sperrbalken formschlüssig hält und in dem das Anschlusselement gegen ein ungewolltes Entfernen kraftschlüssig gesichert ist. Halteelemente können im Boden, in der Decke oder in den Seitenwänden des Laderaums angeordnet sein und werden typischerweise durch Zurrschienen gebildet, die eine Vielzahl von nebeneinander geordneten Halteelementen darstellen.

Ein Anschlusselement im Sinne der vorliegenden Erfindung ist ein in Form und Größe zum Halteelement angepasstes Komplementärelement. Derartige Systeme bestehend aus Anschlusselementen an den Enden eines Sperrbalkens und Halteelementen in Form von Zurrschienen zählen in unterschiedlichen Ausführungen zum Stand der Technik und sind weiter unten noch beispielhaft aufgeführt.

Unter Balkenteilen im Sinne der anmeldungsgemäßen Erfindung müssen nicht notwendigerweise die rohrförmigen Balkenteile verstanden werden, sondern es können hier beliebige Balkenteile, beispielsweise ein Anschlusselement gegenüber dem übrigen Sperrbalken oder Hälften des Sperrbalkens verstanden werden. Für die Erfindung wesentlich ist, dass der Abstand der Anschlusselemente am Sperrbalken veränderbar ist und dass die Anschlusselemente zueinander über einen Winkel um die Längsachse des Sperrbalkens drehbar angeordnet sind.

Grundsätzlich kann ein Federelement aus einer oder mehreren Federn bestehen, die so angeordnet sind, dass sie eine Torsionskraft zwischen den Balkenteilen bewirken. Besonders vorteilhaft ist es allerdings, das Federelement selbst als Torsionsfeder auszubilden, da dies eine konstruktiv einfache Ausgestaltung des Sperrbalkens erlaubt.

Grundsätzlich können Torsionsfedern unterschiedlicher Bauart verwendet werden, zum Beispiels Drehstabfedern. Für die vorliegende Anwendung besonders vorteilhaft ist es allerdings, wenn die Torsionsfeder durch eine Schraubenfeder gebildet ist, deren Mittellängsachse parallel zur Mittellängsachse des Sperrbalkens angeordnet ist, vorzugsweise mit dieser zusammenfällt. Dabei ist die Anordnung der Torsionsfeder vorteilhaft so, dass diese vollständig in den Sperrbalken integriert ist, also von außen weder sichtbar noch zugänglich ist, sodass nicht nur ein optisch ansprechender Gesamteindruck entsteht, sondern auch die Gefahr von Verletzungen oder Einklemmungen an dem Federelement ausgeschlossen sind.

Unter Rohrabschnitten im Sinne der vorliegenden Erfindung sind auch Rohre zu verstehen, die ihr Innenvolumen nicht vollständig umhüllen, wie beispielsweise Rohre mit Ausnehmungen in der Rohrwandung oder Rohre, die einen U-förmigen Querschnitt aufweisen, also einseitig offen sind.

Grundsätzlich ist der Kraftschluss bei der Eingliederung des Sperrbalkens in die Halteelemente im Laderaum nicht zwingend erforderlich, wenn die Ausgestaltung so ist, dass in alle Richtungen eine formschlüssige Sicherung besteht und diese nur durch Überwindung der Federkraft aufgehoben werden kann. In der Regel wird jedoch auch bei einer solchen Ausgestaltung ein Kraftschluss schon aus dem Grunde wünschenswert sein, um eine spielfreie Eingliederung zu gewährleisten, die während der Fahrt nicht klappert.

Vorteilhaft weist der Sperrbalken zwei ineinander teleskopierbare Rohrabschnitte auf, die vorzugsweise durch Formschlusselemente in Richtung ihrer Längsachse begrenzt beweglich zueinander angeordnet sind. Vorteilhafterweise sind in einem Rohrabschnitt zwei sich in Längsrichtung erstreckende Langlöcher vorgesehen, welche von einem Querstift durchsetzt sind, der in dem anderen Rohrabschnitt festgelegt ist. Dann sind die beiden Rohrabschnitte unverlierbar miteinander verbunden und teleskopierbar, sodass der Sperrbalken in seiner Länge durch einfaches Verschieben der Rohrabschnitte zueinander veränderbar ist.

Vorteilhaft sind diametral gegenüberliegende Langlöcher in dem inneren Rohrabschnitt vorgesehen und der diese durchsetzende Querstift mit seinen Enden in Bohrungen des umgebenden äußeren Rohrabschnitts festgelegt.

Vorteilhaft ist an dem äußeren Rohrabschnitt an seinem nach außen gerichteten Ende ein Anschlusselement angebracht. Dieses kann in gleicher Weise mit Hilfe eines Querstifts und Bohrungen befestigt sein, dann ergibt sich ein modularer Aufbau, bei dem je nach verwendetem Zurrschienensystem unterschiedliche Anschlusselemente eingesetzt werden können, sodass diese vorzugsweise auswechselbar angeordnet sind, sodass auch ein Sperrbalken auf ein anderes Zurrschienensystem umgerüstet werden kann.

Besonders vorteilhaft ist es, wenn der innere Rohrabschnitt an seinen vom äußeren Rohrabschnitt abgewandten Ende mit einem weiteren äußeren Rohrabschnitt verbunden ist, in den es eintaucht und an dessen äußeren Ende ein vorzugsweise ebenfalls auswechselbares Anschlusselement angeordnet ist. Eine solche Ausgestaltung hat den Vorteil, dass der Sperrbalken endseitig einerseits mit dem äußeren Rohrabschnitt und andererseits mit dem weiteren äußeren Rohrabschnitt versehen ist, die vorzugsweise gleiche Durchmesser- und Wandstärkendimensionen besitzen, sodass baugleiche Anschlusselemente eingesetzt werden können.

Wie eingangs erläutert, ist es grundsätzlich beliebig, an welcher Stelle der Sperrbalken so unterbrochen ist, dass zwei Balkenteile zueinander um einen bestimmten Winkel verdrehbar sind. Besonders vorteilhaft ist es allerdings, wenn dieses Drehgelenk im Bereich zwischen dem inneren Rohrabschnitt und dem weiteren äußeren Rohrabschnitt gebildet ist, das heißt, wenn der innere Rohrabschnitt und der weitere äußere Rohrabschnitt in Richtung ihrer Längsachse starr und in Richtung um ihre Längsachse begrenzt beweglich verbunden sind. Dann ergibt sich die Teleskopierbarkeit des Sperrbalkens durch Längsbewegung zwischen dem inneren Rohrabschnitt und dem äußeren Rohrabschnitt und die Drehbarkeit durch Drehbewegung zwischen dem inneren Rohrabschnitt und dem weiteren äußeren Rohrabschnitt.

Die Anordnung des Federelements innerhalb des Sperrbalkens erfolgt vorteilhaft über eine mindestens zweiteilige Federaufnahme, bei welcher ein erstes Aufnahmeteil mit einem Ende der Feder und ein zweites Aufnahmeteil mit dem anderen Ende der Feder so verbunden ist, dass Torsionskräfte übertragen werden können. Dabei ist vorteilhaft das erste Aufnahmeteil drehfest mit dem weiteren äußeren Rohrabschnitt und das zweite Aufnahmeteil drehfest mit dem inneren Rohrabschnitt verbunden, sodass diese Torsionskräfte der Feder auf die tragenden Teile des Sperrbalkens übertragen werden. Dabei ist vorteilhaft das erste Aufnahmeteil rohrförmig ausgebildet, um die Feder aufzunehmen und nach außen hin schützend und führend zu umgeben. Dieses erste Aufnahmeteil ist gemäß einer vorteilhaften Weiterbildung der Erfindung innerhalb des weiteren äußeren Rohrabschnitts angeordnet und fest mit diesem verbunden.

Das zweite Aufnahmeteil kann ebenfalls rohrförmig ausgebildet sein. Unabhängig, ob dieses nun als Hohlteil oder aus Vollmaterial ausgebildet ist, weist es vorteilhaft einen zylindrischen Abschnitt auf, der die Feder an ihren Innenumfang führt und durchsetzt.

Vorteilhaft ist das zweite Aufnahmeteil an einem Ende, zumindest in eine Drehrichtung um die Mittellängsachse formschlüssig mit der Feder verbunden, wobei das zweite Aufnahmeteil das erste Aufnahmeteil durchsetzt und das durchsetzende Ende des zweiten Aufnahmeteils zumindest drehfest, vorzugsweise jedoch fest mit dem inneren Rohrabschnitt verbunden ist. Eine solche Konstruktion ist besonders vorteilhaft, da die Schraubenfeder geschützt zwischen dem ersten und dem zweiten Aufnahmeteil angeordnet, an ihren Enden jeweils drehfest mit einem der Aufnahmeteile verbunden ist und die Aufnahmeteile selbst fest und somit auch drehfest mit den entsprechenden Rohrabschnitten verbunden sind. So ergibt sich ein kostengünstiger, stabiler und, auch hinsichtlich der Montage, vorteilhafter Aufbau.

Dabei ist die Dimensionierung der Aufnahmeteile vorteilhaft so, dass das durchsetzende Ende des zweiten Aufnahmeteils in den inneren Rohrabschnitt eintaucht und dort durch einen Querstift fest mit diesem verbunden ist.

Die Erfindung ist nachfolgend anhand von in den Zeichnungen dargestellten Ausführungsbeispielen näher erläutert. Es zeigen:
- Fig. 1: in stark vereinfachter Darstellung eine Draufsicht auf einen Sperrbalken gemäß der Erfindung,
- Fig. 2: eine Seitenansicht auf den Sperrbalken gemäß Fig. 1,
- Fig. 3: einen Schnitt längs der Schnittlinie III-III in Fig. 1,
- Fig. 4: eine Explosionsdarstellung der Federaufnahmeteile mit Feder,
- Fig. 5: in schematischer perspektivischer Darstellung die Anordnung einer Airline-Schiene mit einem davor befindlichen Ende eines Sperrbalkens,
- Fig. 6, 7, 8 und 9: in schematischer Darstellung vier Positionen zwischen dem Sperrbalkenseitigen Anschlusselement und dem Aufnahmeteil in der Airline-Schiene beim Befestigen des Sperrbalkens,
- Fig. 10, 11 und 12: in vereinfachter perspektivischer Darstellung die Befestigung eines Anschlusselementes eines Sperrbalkens an einem mit Querstäbchen ausgestatteten Halteelements,
- Fig. 13 und 14: die eingeführte bzw. durch Drehen verriegelte Position eines Anschlusselements im Halteelement einer Anker-Kombischiene und
- Fig. 15 und 16: die vergleichbaren Stellungen eines Anschlusselements in einer Schlüssellochschiene.

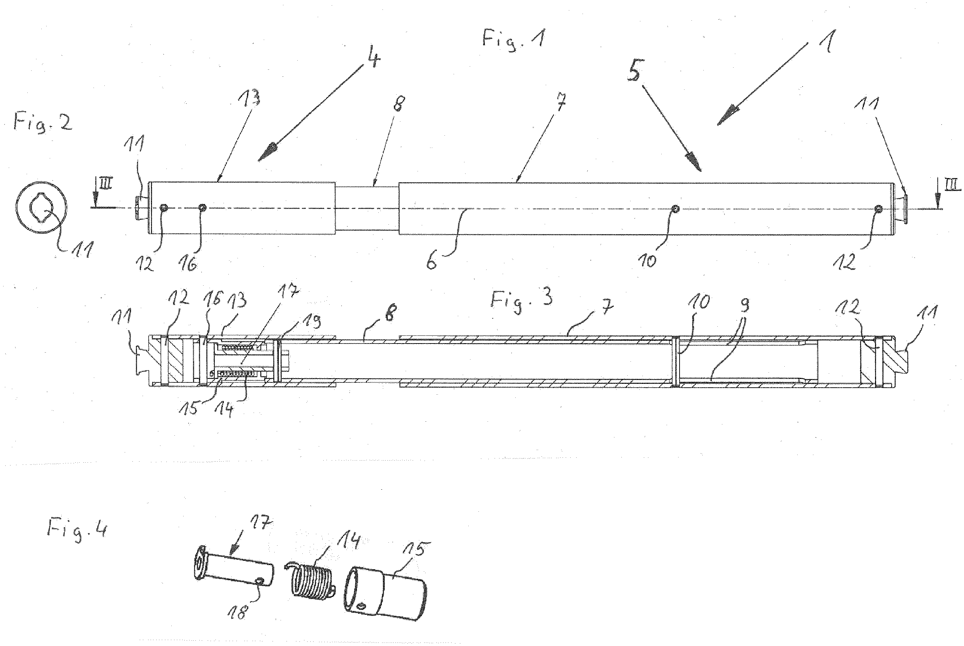

Bei dem anhand der Figuren 1 bis 9 dargestellten Sperrbalken handelt es sich um einen teleskopierbaren Sperrbalken 1 mit endseitigen Anschlusselementen 11 zur Aufnahme in Halteelementen 2 wie sie durch eine Airline-Schiene 3 gebildet sind. Solche Airline-Schienen 3 sind beispielsweise in gegenüberliegenden Seitenwänden eines Laderaums eines Fahrzeugs angeordnet und ermöglichen bei senkrechter Anordnung der Schiene eine Anordnung des Sperrbalkens in unterschiedlichen Höhen und bei waagerechter Anordnung der Schienen eine Anordnung des Sperrbalkens an unterschiedlichen Orten in Längsrichtung des Laderaums.

Wie insbesondere aus den Figuren 1 und 3 hervorgeht, ist der Sperrbalken 1 aus zwei Balkenteilen, nämlich in den Figuren einem linken Balkenteil 4 und einem rechten Balkenteil 5 gebildet, welche um eine Mittellängsachse 6 des Sperrbalkens zueinander drehbar angeordnet sind.

Der Balkenteil 5 weist einen äußeren Rohrabschnitt 7 auf, in dem ein innerer Rohrabschnitt 8 teleskopierbar, das heißt in Längsrichtung des Sperrbalkens verstellbar angeordnet ist. Der innere Rohrabschnitt 8 weist zwei parallel zur Mittellängsachse 6 angeordnete Langlöcher 9 auf, die von einem Querstift 10 durchsetzt sind, welcher in dem äußeren Rohrabschnitt 7 festgelegt ist, sodass der innere Rohrabschnitt 8 unverlierbar mit dem äußeren Rohrabschnitt 7 verbunden ist und entsprechend der Länge der Langlöcher 9 begrenzt teleskopierbar. An dem freien äußeren Ende des äußeren Rohrabschnitts 7 ist ein Anschlusselement 11 befestigt, welches hier durch einen Anschlusskopf zum Anschluss in ein Halteelement 2 einer Airline-Schiene 3 ausgebildet ist. Dieses Anschlusselement 11 ist am Ende eines zylindrisch abgestuften Bauteils angeordnet, welches in das freie Ende des äußeren Rohrabschnitts 7 eingesteckt und dort mittels eines Querstiftes 12 festgelegt ist.

Der innere Rohrabschnitt 8 taucht mit seinem mit den Figuren 1 und 3 rechten Ende in den äußeren Rohrabschnitt 7 ein, mit seinem anderen, linken Ende taucht er in einen weiteren äußeren Rohrabschnitt 13 ein. Dieser weitere Rohrabschnitt 13 hat dieselben Querschnittsabmessungen wie der äußere Rohrabschnitt 7, ist jedoch in Längsrichtung der Mittellängsachse 6 starr mit dem inneren Rohrabschnitt 8 verbunden, jedoch um die Längsachse 6 drehbar zum Rohrabschnitt 8 angeordnet. An dem anderen Ende des weiteren äußeren Rohrabschnitts 13 ist in gleicher Weise wie am freien Ende des äußeren Rohrabschnitts 7 ein Anschlusselement 11 festgelegt, ebenfalls mit einem Querstift 12.

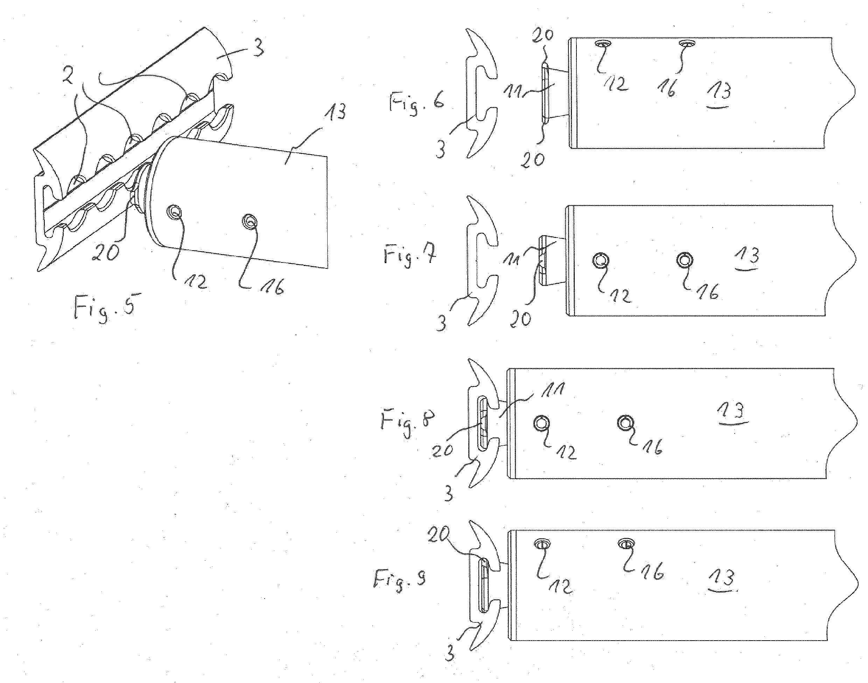

Der weitere äußere Rohrabschnitt 13 ist auf dem inneren Rohrabschnitt 8 jedoch nicht frei drehbar, sondern begrenzt und nur in eine Richtung entgegen der Federkraft einer als Torsionsfeder ausgebildeten Schraubenfeder 14 und in Gegenrichtung mit dieser Federkraft. Die Schraubenfeder 14 ist in einer Federaufnahme angeordnet, welche ein erstes hülsenförmiges Aufnahmeteil 15 aufweist, das rohrförmig ausgebildet ist und mittels eines Querstifts 16 fest mit dem weiteren äußeren Rohrabschnitt 13 verbunden ist. Dieses erste Aufnahmeteil 15 umgibt die Schraubenfeder 14 über den gesamten Umfang. Das in Figur 6 rechte Ende der Schraubenfeder ist innerhalb des Aufnahmeteils 15 drehfest angeordnet.

Ein zweites Aufnahmeteil 17 ist vorgesehen, welches einen zylindrischen Abschnitt aufweist, der die Schraubenfeder 14 durchsetzt und diese an der Innenseite führt. Dieses zweite Aufnahmeteil 17 weist ein flanschartiges Ende auf, welches eine Ausnehmung aufweist, in welcher das andere Ende der Schraubenfeder 14 drehfest angeordnet ist. Dieses zweite Aufnahmeteil 17 durchsetzt in Einbaulage das erste Aufnahmeteil 15, wobei in dem dazwischen gebildeten Ringraum die Schraubenfeder 14 angeordnet ist.

Das freie Ende des zweiten Aufnahmeteils 17 überragt in Einbaulage das erste Aufnahmeteil 15. In dem überragenden Teil ist eine Querbohrung 18 vorgesehen, welche mittels eines Querstifts 19 fest mit dem inneren Rohrabschnitt 8 verbunden ist. Auf diese Weise sind sämtliche Bauteile einschließlich Feder 14 und den Federaufnahmeteilen 15 und 17 formschlüssig innerhalb des weiteren äußeren Rohrabschnitts 13 aufgenommen. Durch den Querstift 19 ist somit nicht nur das zweite Aufnahmeteil 17 drehfest mit dem inneren Rohrabschnitt 8 verbunden, sondern auch mit dem weiteren äußeren Rohrabschnitt 13.

Der so gebildete Sperrbalken 1 kann in seiner Länge durch Teleskopieren der Rohrabschnitte 7 und 8 quasi kraftfrei verändert werden. Durch Tordieren des weiteren äußeren Rohrabschnitts 13 gegenüber dem inneren Rohrabschnitt 8 können die Anschlusselemente 11 entgegen Federkraft in ihrer Winkelstellung zueinander bezogen auf die Längsmittelachse 6 verdreht werden.

Soll nun ein solcher Sperrbalken 1 mit einem für eine Airline-Schiene 3 ausgestatteten Anschlusselement 11 in einen Laderaum eingegliedert werden, so wird zunächst ein Anschlusselement 11, zum Beispiel das in den Figuren 1 und 3 rechte Ende, in eine Airline-Schiene 3 an einer Seite des Laderaums gesteckt, wonach der Sperrbalken teleskopiert wird bis auch das andere in den Figuren 1 und 3 hier linke Ende, das entsprechend gegenüberliegende Halteelement 2 der Airline-Schiene 3 erreicht hat. Diese Stellung ist in Figur 6 dargestellt. Um das Anschlusselement 11 in das Halteelement 2 der Airline-Schiene 3 einführen zu können, müssen die Vorsprünge 20 so ausgerichtet werden, dass sie in Richtung der Längsausnehmung der Schiene angeordnet sind. Es ist also das in den Figuren 1 und 3 linke Ende des Sperrbalkens, also der weitere äußere Rohrabschnitt 13 mit der Hand zu ergreifen und entgegen der Kraft der Schraubenfeder 14 so zu drehen, dass die Vorsprünge 20 in Richtung der durchgehenden Nut in der Schiene 3 angeordnet sind, so wie dies in Figur 7 dargestellt ist. In dieser Stellung ist dann dieses linke Ende des Sperrbalkens weiter zu teleskopieren, bis das Anschlusselement 11 vollständig in das Halteelement 2, das heißt, bis zum Boden der Airline-Schiene 3 eingegliedert ist. Diese Stellung ist in Figur 8 dargestellt. Das Teleskopieren kann dabei praktisch kraftfrei erfolgen, da lediglich der innere Rohrabschnitt 8 in Bezug auf den äußeren Rohrabschnitt 7 in Längsrichtung zu verschieben ist.

Wenn nun in der in Figur 8 dargestellten Stellung der Sperrbalken 1, insbesondere der noch mit der Hand umgegriffene weitere äußere Rohrabschnitt 13 losgelassen wird, dann dreht dieser Teil des Sperrbalkens 1, also der weitere Rohrabschnitt 13 in Bezug auf den inneren Rohrabschnitt 8 durch die Kraft der Torsionsschraubenfeder 14 bis die Vorsprünge 20 des Anschlusselements 11 innerhalb der Schiene 3 anliegen und somit das Anschlusselement 11 formschlüssig festgelegt ist. Abgestützt wird dieses durch in Drehrichtung gegenüber dem am anderen Ende im Halteelement 2 angeordneten Anschlusselement 11. Das Lösen erfolgt in umgekehrter Reihenfolge.

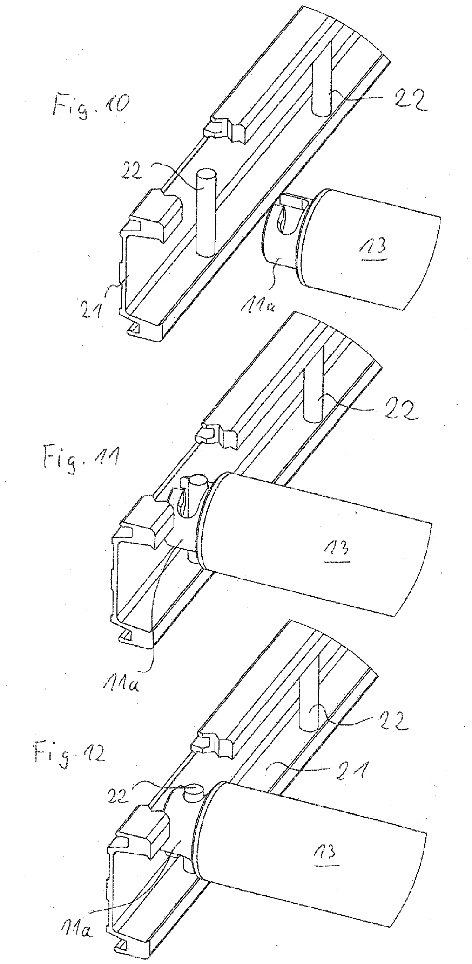

Anhand der Figuren 10 bis 12 ist das Festlegen eines Sperrbalkens beschrieben, dessen Anschlusselement 11a bajonettartig in eine U-förmige Schiene 21 eingreift, welche mit stegparallelen Stäbchen 22 versehen ist, welche von dem Bajonett des Anschlusselements 11 formschlüssig umgriffen sind. Auch hier ist deutlich sichtbar, dass zunächst durch Drehen eines Rohrendes das Bajonett in die Stellung gebracht wird, in welcher es ein Stäbchen 22 umgreifend in die Schiene 21 eingeführt werden kann, sodann wird der Sperrbalken teleskopiert und das Anschlusselement 11a soweit in die Schiene geschoben, dass das Stäbchen 22 umfasst wird. Wird nun dieses Ende des Sperrbalkens losgelassen, so dreht sich dieses durch Federkraft derart, dass eine vollständige formschlüssige Sicherung erfolgt, die nur durch Drehen in Gegenrichtung gelöst werden kann. Ein solches Drehen kann jedoch nur entgegen der Kraft der Feder 14 erfolgen, die somit für eine Sicherung in dieser Position sorgt.

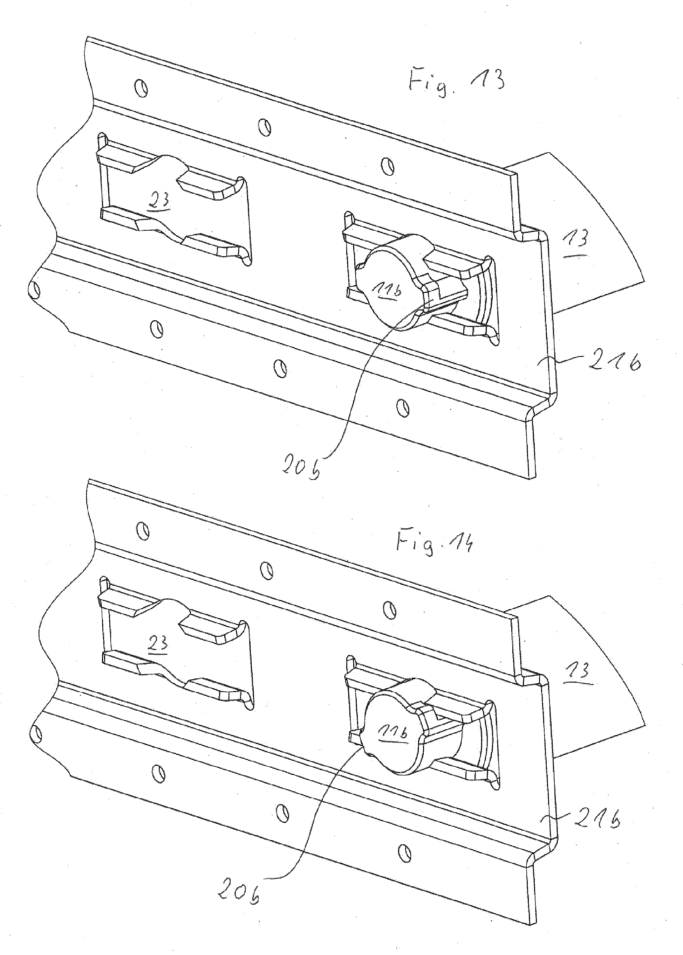

Anhand der Figuren 13 und 14 ist dargestellt, wie ein Anschlusselement 11b, welches eine zylindrische Form mit radialen Vorsprüngen 20b aufweist, in einer entsprechenden Lochschiene 21b eingliederbar ist, welche Ausnehmungen 23 aufweist, die eine im Wesentlichen langgestreckte rechteckige Form mit einer zentralen, die Rechteckausnehmung überragenden kreisrunden Ausnehmungen gebildet sind. Das zylindrische Anschlusselement kann wie Figur 13 zeigt, eine solche Ausnehmung 23 nur durchsetzen, wenn die Vorsprünge 20b so angeordnet sind, dass sie durch den neben der kreisrunden Bohrung gebildeten Freiraum der Rechteckausnehmung gelangen können. Wenn dann der weitere äußere Rohrabschnitt 13 losgelassen wird und das Anschlusselement 11b durch die Federkraft der Feder 14 um die Längsachse des Sperrbalkens gedreht wird, dann gelangen diese Vorsprünge 20b hinter die Seiten dieser Ausnehmung 23 und sichern damit das Anschlusselement 11b gegen ein Herausziehen aus der Ausnehmung 23.

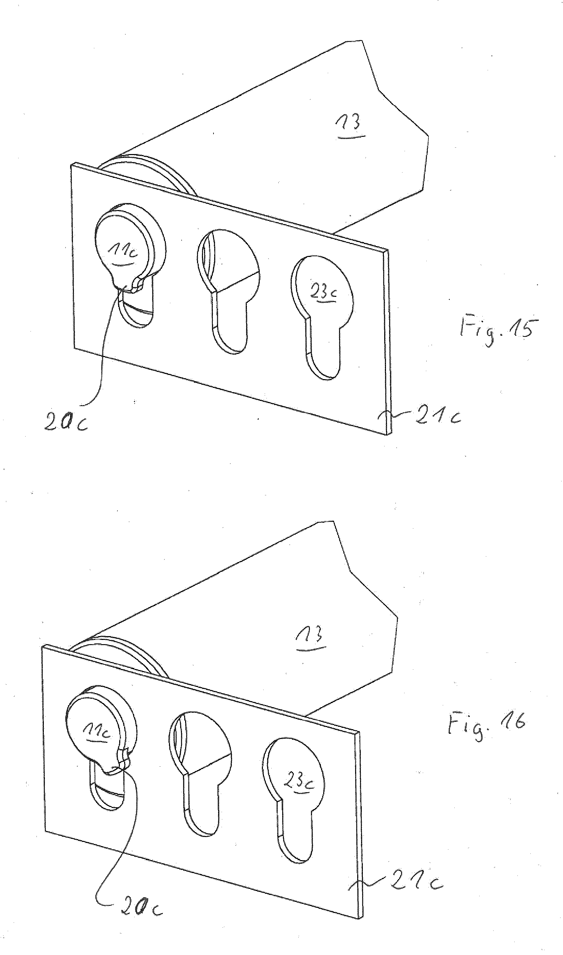

Anhand der Figuren 15 und 16 ist dargestellt, wie ein Anschlusselement 11c in einer Schiene mit schlüssellochförmigen Ausnehmungen 23c in einer Schiene 21c in analoger Weise festgelegt wird. Dort weist das Anschlusselement 11c einen Vorsprung 20c auf, der durch Rückdrehen des Anschlusselements 11c zusammen mit dem weiteren äußeren Rohrabschnitt 13 den Sperrbalken gegen ein Herausfallen oder Herausziehen aus der schlüssellochförmigen Ausnehmung 23c hindert.

Der Vollständigkeit halber sei darauf hingewiesen, dass bei den Ausführungen, wie sie anhand der Figuren 13 und 14 einerseits sowie 15 und 16 andererseits dargestellt sind, grundsätzlich ein Kraftschluss in Einbaulage entbehrlich ist, wenn die Schwenkbarkeit begrenzt ist und in der Schließstellung durch Federkraft gehalten ist. Allerdings ist ein Kraftschluss schon deshalb in der Regel erstrebenswert, um ein Klappern der Bauteile zu vermeiden.

### Bezugszeichenliste

- 1: Sperrbalken
- 2: Halteelement
- 3: Airline-Schiene
- 4: Balkenteil links
- 5: Balkenteil rechts
- 6: Mittellängsachse
- 7: äußerer Rohrabschnitt
- 8: innerer Rohrabschnitt
- 9: Langlöcher
- 10: Querstift
- 11: Anschlusselement
- 11a: Anschlusselement in den Figuren 10 bis 12
- 11b: Anschlusselement in den Figuren 13 bis 14
- 11c: Anschlusselement in den Figuren 15 bis 16
- 12: Querstift
- 13: weiterer äußerer Rohrabschnitt (links)
- 14: Schraubenfeder, Torsionsfeder
- 15: erstes Aufnahmeteil
- 16: Querstift
- 17: zweites Aufnahmeteil
- 18: Querbohrung
- 19: Querstift
- 20: Vorsprünge
- 20b: Vorsprünge von 11b
- 20c: Vorsprung von 11c
- 21: Schiene in den Figuren 10 bis 12
- 21b: Schiene in den Figuren 13 und 14
- 21c: Schiene in den Figuren 15 und 16
- 22: Stäbchen
- 23: Ausnehmung
- 23c: Ausnehmungen in den Figuren 15 und 16

## Patentansprüche

1. Sperrbalken zur Anordnung in einem Laderaum eines Fahrzeugs , der zur formschlüssigen Eingliederung in zwei gegenüberliegend fahrzeugseitig angeordnete Halteelemente (2) vorgesehen ist, mit mindestens zwei in Längsrichtung des Balkens (1) teleskopierbar angeordneten Rohrabschnitten (7, 8), mit an den Enden des Sperrbalkens (1) angeordneten Anschlusselementen (11), welche jeweils zur Aufnahme in ein Halteelement (2) ausgebildet sind, mit mindestens einem Federelement (14), wobei zwei Balkenteile (4, 5) um ihre Längsachse (6) über einen Winkel drehbar zueinander angeordnet sind, **dadurch gekennzeichnet, dass** das Federelement (14) so ausgebildet und angeordnet ist, dass es eine zwischen den Balkenteilen (4,5) wirkende Torsionskraft erzeugen kann.

2. Sperrbalken nach Anspruch 1, **dadurch gekennzeichnet, dass** das Federelement eine Torsionsfeder (14) ist.

3. Sperrbalken nach Anspruch 1 oder 2, **dadurch gekennzeichnet, dass** die Torsionsfeder durch eine Schraubenfeder (14) gebildet ist, deren Mittellängsachse parallel zur Mittellängsachse (6) des Sperrbalkens (1) angeordnet ist, vorzugsweise mit dieser zusammenfällt.

4. Sperrbalken nach einem der vorhergehenden Ansprüche, **dadurch gekennzeichnet, dass** der Sperrbalken (1) zwei ineinander teleskopierbare Rohrabschnitte (7, 8) aufweist, die vorzugsweise durch Formschlusselemente (9, 10) in Richtung ihrer Längsachse begrenzt beweglich zueinander angeordnet sind

5. Sperrbalken nach einem der vorhergehenden Ansprüche, **dadurch gekennzeichnet, dass** die Formschlusselemente durch mindestens ein Langloch (9) in einem Rohrabschnitt (8) und einen darin geführten Querstift (10) gebildet sind, der in dem anderen Rohrabschnitt (7) festgelegt ist.

6. Sperrbalken nach einem der vorhergehenden Ansprüche, **dadurch gekennzeichnet, dass** der äußere Rohrabschnitt (7) an seinem nach außen gerichtetem Ende mit einem vorzugsweise auswechselbaren Anschlusselement (11) versehen ist

7. Sperrbalken nach einem der vorhergehenden Ansprüche, **dadurch gekennzeichnet, dass** der innere Rohrabschnitt (8) an seinem vom äußeren Rohrabschnitt (7) abgewandten Ende mit einem weiteren äußeren Rohrabschnitt (13) verbunden ist, in den es eintaucht und an dessen äußeren Ende ein vorzugsweise auswechselbares Anschlusselement (11) angeordnet ist.

8. Sperrbalken nach einem der vorhergehenden Ansprüche, **dadurch gekennzeichnet, dass** der innere Rohrabschnitt (8) und der weitere äußere Rohrabschnitt (13) in Richtung ihrer Längsachse (6) starr und in Richtung um ihre Längsachse (6) begrenzt beweglich angeordnet sind.

9. Sperrbalken nach einem der vorhergehenden Ansprüche, **dadurch gekennzeichnet, dass** eine mindestens zweiteilige Federaufnahme (15, 17) vorgesehen ist, bei welcher ein erstes Aufnahmeteil (15) mit einem Ende der Feder (14) und ein zweites Aufnahmeteil (17) mit dem anderen Ende der Feder (14) verbunden ist, wobei das erste Aufnahmeteil (15) drehfest mit dem weiteren äußeren Rohrabschnitt (13) und das zweite Aufnahmeteil (17) drehfest mit dem inneren Rohrabschnitt (8) verbunden ist.

10. Sperrbalken nach einem der vorhergehenden Ansprüche, **dadurch gekennzeichnet, dass** das erste Aufnahmeteil (15) rohrförmig ausgebildet ist und die Feder (14) außen umgibt.

11. Sperrbalken nach einem der vorhergehenden Ansprüche, **dadurch gekennzeichnet, dass** das erste Aufnahmeteil (15) innerhalb des weiteren äußeren Rohrabschnitts (13) angeordnet und fest mit diesem verbunden ist.

12. Sperrbalken nach einem der vorhergehenden Ansprüche, **dadurch gekennzeichnet, dass** das zweite Aufnahmeteil (17) einen zylindrischen Abschnitt aufweist, der die Feder (14) an ihrem Innenumfang führt und durchsetzt.

13. Sperrbalken nach einem der vorhergehenden Ansprüche, **dadurch gekennzeichnet, dass** das zweite Aufnahmeteil (17) an einem Ende zumindest in eine Drehrichtung formschlüssig mit der Feder (14) verbunden ist, dass das zweite Aufnahmeteil (17) das erste Aufnahmeteil (15) durchsetzt und das das durchsetzende Ende des zweiten Aufnahmeteils (17) zumindest drehfest, vorzugsweise fest mit dem inneren Rohrabschnitt (8) verbunden ist.

14. Sperrbalken nach einem der vorhergehenden Ansprüche, **dadurch gekennzeichnet, dass** das durchsetzende Ende des zweiten Aufnahmeteils (17) in den inneren Rohrabschnitt (8) eintaucht und durch einen Querstift (19) fest mit diesem verbunden ist.

## Claims

1. A locking bar for arrangement in a loading space of a vehicle, which locking bar is provided for positive integration into two holding elements (2) arranged opposite one another at a vehicle side, with at least two tube sections (7, 8) which are arranged telescopically in the longitudinal direction of the locking bar (1), with connection elements (11) which are arranged at the ends of the locking bar (1) and formed in each case to be received in a holding element (2), and with at least one spring element (14), wherein two bar parts (4, 5) are arranged to be rotatable to one another about their longitudinal axis (6) over an angle, **characterized in that** the spring element (14) is formed and arranged in such a manner that it can generate a torsional force acting between the bar parts (4, 5).

2. The locking bar according to claim 1, **characterized in that** the spring element is a torsion spring (14).

3. Locking bar according to claim 1 or 2, **characterized in that** the torsion spring is formed by a helical spring (14), the central longitudinal axis of which is arranged parallel to the central longitudinal axis (6) of the locking bar (1) and preferably coincides therewith.

4. The locking bar according to any one of the preceding claims, **characterized in that** the locking bar (1) has two tube sections (7, 8) which can be telescoped into one another and are arranged so as to be movable relative to one another to a limited extent in the direction of their longitudinal axis by means of positive-fit elements (9, 10).

5. The locking bar according to any one of the preceding claims, **characterized in that** the positive-fit elements are formed by at least one elongate hole (9) in one tube section (8) and a transverse pin (10) guided therein and fixed in the other tube section (7).

6. The locking bar according to any one of the preceding claims, **characterized in that** the outer tube section (7) is provided at its outwardly directed end with a preferably exchangeable connection element (11).

7. The locking bar according to any one of the preceding claims, **characterized in that** the inner tube section (8) is connected at its end facing away from the outer tube section (7) to a further outer tube section (13) into which it immerses and at the outer end of which a preferably exchangeable connection element (11) is arranged.

8. The locking bar according to any one of the preceding claims, **characterized in that** the inner tube section (8) and the further outer tube section (13) are arranged rigidly in the direction of their longitudinal axis (6) and movable to a limited extent in the direction about their longitudinal axis (6).

9. The locking bar according to any one of the preceding claims, **characterized in that** an at least two-part spring receiver (15, 17) is provided of which a first receiver part (15) is connected to one end of the spring (14) and a second receiver part (17) is connected to the other end of the spring (14), wherein the first receiver part (15) is connected to the further outer tube section (13) in a rotationally fixed manner and the second receiver part (17) is connected to the inner tube section (8) in a rotationally fixed manner.

10. The locking bar according to any one of the preceding claims, **characterized in that** the first receiver part (15) is tubular and surrounds the spring (14) on the outside.

11. The locking bar according to any one of the preceding claims, **characterized in that** the first receiver part (15) is arranged inside the further outer tube section (13) and is fixedly connected thereto.

12. The locking bar according to any one of the preceding claims, **characterized in that** the second receiver part (17) has a cylindrical section which guides and passes through the spring (14) at the inner circumference thereof.

13. The locking bar according to any one of the preceding claims, **characterized in that** at one end, the second receiver part (17) is positively connected to the spring (14) at least in one direction of rotation, **in that** the second receiver part (17) passes through the first receiver part (15) and **in that** the passing-through end of the second receiver part (17) is connected to the inner tube section (8) at least in a rotationally fixed manner, preferably in a fixed manner.

14. The locking bar according to any one of the preceding claims, **characterized in that** the passing-through end of the second receiver part (17) immerses into the inner tube section (8) and is fixedly connected thereto by a transverse pin (19).

## Revendications

1. Barre de verrouillage à installer dans un espace de chargement d'un véhicule, qui est configurée pour une insertion par complémentarité de forme dans deux éléments de maintien (2) situés en regard dans le véhicule, avec au moins deux parties de tube (7, 8) disposées de façon télescopique dans la direction longitudinale de la barre (1), avec des éléments de raccordement (11) disposés aux extrémités de la barre de verrouillage (1) qui sont configurés, chacun, pour être reçu dans un élément de maintien (2), avec au moins un élément à ressort (14), deux parties de barre (4, 5) étant disposées de façon à pouvoir être tournées l'une par rapport à l'autre sur un angle autour de leur axe longitudinal (6), **caractérisée en ce que** l'élément à ressort (14) est configuré et disposé de façon à pouvoir engendrer un effort de torsion agissant entre les parties de barre (4, 5).

2. Barre de verrouillage selon la revendication 1, **caractérisée en ce que** l'élément à ressort est un ressort de torsion (14).

3. Barre de verrouillage selon la revendication 1 ou 2, **caractérisée en ce que** le ressort de torsion est formé d'un ressort hélicoïdal (14) dont l'axe longitudinal central est disposé parallèlement à l'axe longitudinal central (6) de la barre de verrouillage (1) et coïncide de préférence avec ce dernier.

4. Barre de verrouillage selon l'une des revendications précédentes, **caractérisée en ce que** la barre de verrouillage (1) comprend deux parties de tube (7, 8) pouvant être mues l'une dans l'autre de manière télescopique et qui sont disposées mobiles l'une par rapport à l'autre dans la direction de leur axe longitudinal et de manière limitée, de préférence, moyennant des éléments à complémentarité de forme (9, 10).

5. Barre de verrouillage selon l'une des revendications précédentes, **caractérisée en ce que** les éléments à complémentarité de forme sont formés d'au moins un trou oblong (9) dans une partie de tube (8) et d'une goupille transversale (10) guidée dans ce dernier et fixée dans l'autre partie de tube (7).

6. Barre de verrouillage selon l'une des revendications précédentes, **caractérisée en ce que**, à son extrémité orientée vers l'extérieur, la partie de tube extérieure (7) est pourvue d'un élément de raccordement (11) de préférence remplaçable.

7. Barre de verrouillage selon l'une des revendications précédentes, **caractérisée en ce que**, à son extrémité opposée à la partie de tube extérieure (7), la partie de tube intérieure (8) est reliée à une partie de tube extérieure (13) supplémentaire dans laquelle elle plonge et à l'extrémité extérieure de laquelle est disposé un élément de raccordement (11) de préférence remplaçable.

8. Barre de verrouillage selon l'une des revendications précédentes, **caractérisée en ce que** la partie de tube intérieure (8) et la partie de tube extérieure (13) supplémentaire sont formées immobiles dans la direction de leur axe longitudinal (6) et mobiles de manière limitée dans la direction autour de leur axe longitudinal (6).

9. Barre de verrouillage selon l'une des revendications précédentes, **caractérisée en ce qu'**est prévu, en au moins deux parties, un logement pour ressort (15, 17), dont une première partie de logement (15) est reliée à une extrémité du ressort (14) et une deuxième partie de logement (17) à l'autre extrémité du ressort (14), la première partie de logement (15) étant reliée à la partie de tube extérieure (13) supplémentaire de manière solidaire en rotation et la deuxième partie de logement (17) de manière solidaire en rotation à la partie de tube intérieure (8).

10. Barre de verrouillage selon l'une des revendications précédentes, **caractérisée en ce que** la première partie de logement (15) est conformée en forme de tube et entoure le ressort (14) extérieurement.

11. Barre de verrouillage selon l'une des revendications précédentes, **caractérisée en ce que** la première partie de logement (15) est disposée à l'intérieur de la partie de tube extérieure (13) supplémentaire et est fermement reliée à celle-ci.

12. Barre de verrouillage selon l'une des revendications précédentes, **caractérisée en ce que** la deuxième partie de logement (17) comprend une partie cylindrique qui guide le ressort (14) à son périmètre intérieur et le traverse.

13. Barre de verrouillage selon l'une des revendications précédentes, **caractérisée en ce que**, à une extrémité, la deuxième partie de logement (17) est reliée au ressort (14) par complémentarité de forme dans au moins une direction de rotation, **en ce que** la deuxième partie de logement (17) traverse la première partie de logement (15) et **en ce que** l'extrémité traversante de la deuxième partie de logement (17) est reliée à la partie de tube intérieure (8) au moins de manière solidaire en rotation, de préférence de manière ferme.

14. Barre de verrouillage selon l'une des revendications précédentes, **caractérisée en ce que** l'extrémité traversante de la deuxième partie de logement (17) plonge dans la partie de tube intérieure (8) et est fermement reliée à celle-ci par une goupille transversale (19).
